Europäisches Patentamt

European Patent Office

Office européen des brevets

(19)

(11) Numéro de publication : **0 046 096**
**B1**

(12) **FASCICULE DE BREVET EUROPÉEN**

(45) Date de publication du fascicule du brevet :
09.01.85

(51) Int. Cl.⁴ : **F 02 K  1/76, F 02 K  1/15**

(21) Numéro de dépôt : **81401163.1**

(22) Date de dépôt : **22.07.81**

(54) **Dispositif détecteur de position d'un inverseur de poussée de turboréacteur et de son verrouillage.**

(30) Priorité : **11.08.80 FR 8017640**

(43) Date de publication de la demande :
**17.02.82 Bulletin 82/07**

(45) Mention de la délivrance du brevet :
**09.01.85 Bulletin 85/02**

(84) Etats contractants désignés :
**DE FR GB**

(56) Documents cités :
**BE-A-  666 798**
**FR-A- 1 514 925**
**GB-A-  759 891**
**GB-A-  921 917**
**US-A- 2 923 127**
**US-A- 2 974 904**
**US-A- 3 034 296**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Halin, Yves Robert**
**23, rue de Corot La Rochette**
**F-77000 Melun (FR)**
Inventeur : **Hersen, René Marie Joseph**
**2, rue Flora Tristen**
**F-77380 Combs La Ville (FR)**

(74) Mandataire : **Moinat, François et al**
**S.N.E.C.M.A. Service des Brevets Boîte Postale 81**
**F-91003 Evry Cedex (FR)**

Jouve, 18, rue St-Denis, 75001 Paris, France

## Description

La présente invention a pour objet un dispositif détecteur de position d'un inverseur de poussée de turboréacteur et de son verrouillage.

Afin de s'assurer du verrouillage de la partie mobile d'un inverseur de poussée, on a généralement recours à un microrupteur de détection de position.

Lorsque la partie mobile est en position escamotée et verrouillée, le circuit électrique du détecteur doit être ouvert et par conséquent une lampe d'indication de verrouillage est éteinte.

Toute autre configuration de la partie mobile ou du système de verrouillage doit entraîner la fermeture du circuit électrique, et par suite l'allumage de la lampe d'indication de verrouillage.

Toutefois, cette disposition présente l'inconvénient de nécessiter la fixation d'un microrupteur et de son câblage sur une pièce mobile.

Le dispositif suivant l'invention a pour fonction de manière plus précise de détecter la position de deux organes :

— l'un correspond à une position du dispositif de commande de l'inverseur telle que son verrou soit en position de verrouillage grâce à une commande d'escamotage de l'inverseur transmise à un vérin de verrouillage ;

— l'autre correspond à une position de la partie mobile de l'inverseur telle que cette partie mobile soit en position de fin de course d'escamotage.

Ces deux éléments correspondent à la position « jet direct » de l'inverseur de poussée.

Par ailleurs, on connaît également un certain nombre de moyens tels que :

— réalisation d'une fonction de verrouillage mécanique appliquée à un inverseur de poussée ;

— détection d'une fonction escamotée et verrouillée associée à une lampe d'indication ;

— mise en place du détecteur électrique sur une paroi immobile ;

— réalisation d'une fonction de détection mécanique du type ET appliquée à deux éléments mobiles.

Toutefois, les dispositifs mentionnés ci-dessus sont en général très compliqués et ne permettent pas toujours d'obtenir une bonne précision.

GB-A 921 917 décrit un dispositif de commande d'inverseur de poussée de turboréacteur dont le dispositif de verrouillage comporte un vérin dont la tige actionne une tringlerie associée à des cames susceptibles d'être bloquées par des butées et qui est reliée à une mâchoire susceptible de coopérer avec un élément solidaire de chaque obstacle d'inversion. Ce dispositif ne permet pas toutefois de détecter de manière positive à la fois la position d'une partie mobile d'un inverseur et celle de son moyen de verrouillage.

Par ailleurs, US-A 3 034 296 concerne un mécanisme de commande associé à la fois à un inverseur de poussée et à une régulation de carburant. Ce système à cames de structure complexe utilise une lampe témoin pour la détection du verrouillage.

Le dispositif selon l'invention est du type précité et conformément à la présente invention l'étrier présente un axe sur lequel est susceptible d'être engagé un crochet dudit organe solidaire de l'inverseur et le moyen de verrouillage porte un axe parallèle à son axe de pivotement et sur lequel est articulé un levier actionné par le crochet et présentant deux bras dont l'un est susceptible de venir en contact avec l'extrémité du crochet et dont l'autre est en contact avec un organe mobile de commande du moyen de détection.

Le dispositif suivant l'invention comporte un détecteur électrique fixe qui est à l'abri de fortes sollicitations mécaniques ou chocs, qui se produiraient lors de l'enclenchement de l'inverseur et du verrouillage ; cet avantage est renforcé par le choix de la forme de la partie du levier en contact avec le détecteur qui permet d'obtenir un mouvement progressif et un roulement sans à-coups. Le dispositif est insensible à différentes tolérances sur la position de l'inverseur (imprécision de position du crochet dans le sens transversal, par exemple).

Par ailleurs, le dispositif présente une grande simplicité par l'utilisation d'un nombre minimal de pièces pour réaliser la fonction ET, ce qui améliore la fiabilité qui est remarquable en comparaison d'autres solutions pour résoudre ce problème, faisant appel à des dispositifs électroniques peu fiables dans l'environnement imposé (détecteur de proximité).

Enfin l'organe élastique du détecteur exerce une force qui applique un moment dans le sens du verrouillage, ce qui est favorable à la sécurité et permet d'éviter un déverrouillage provoqué par un défaut du vérin, une rupture du ressort de rappel par exemple.

D'autres caractéristiques et avantages de l'invention seront mieux compris à la lecture de la description qui va suivre d'un mode de réalisation et en se référant aux dessins annexés, sur lesquels :

la figure 1　est une vue en élévation du dispositif détecteur de position d'un inverseur de poussée suivant l'invention ;

la figure 2　est une vue en plan et en coupe partielle du dispositif représenté à la figure 1 ;

la figure 3a　est une vue en élévation du dispositif lorsque la partie mobile est escamotée ;

la figure 3b　est une vue en élévation du dispositif lorsque la partie mobile tend à se déployer sans ordre de commande ;

les figures 4a à 4i　sont des vues du dispositif dont chaque élément est représenté au cours d'un cycle complet.

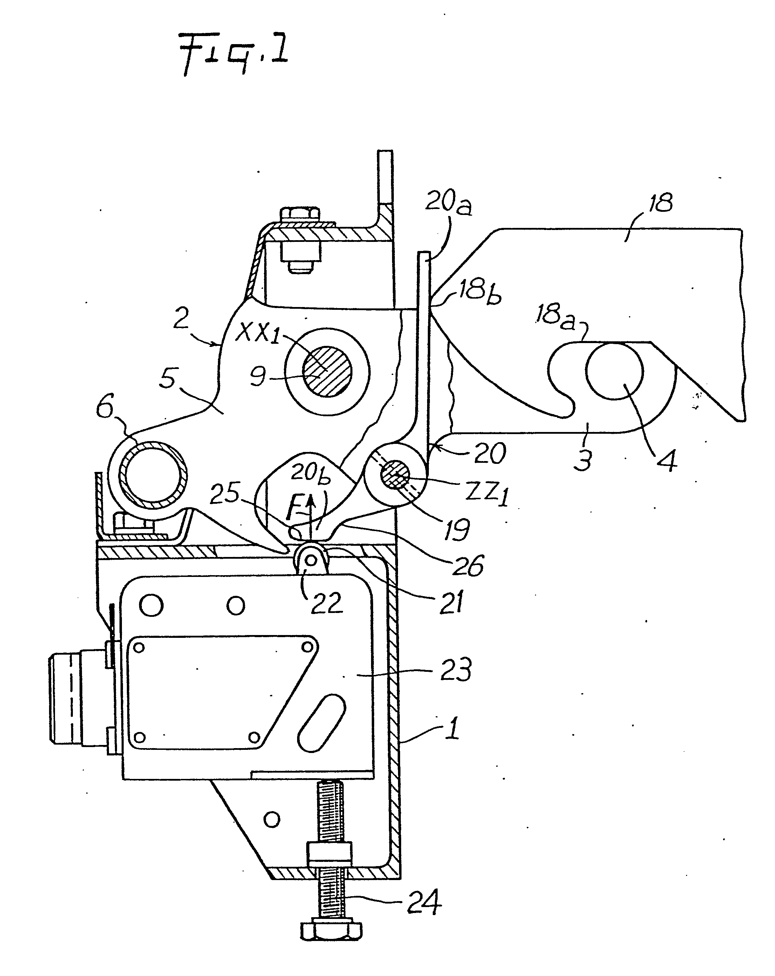

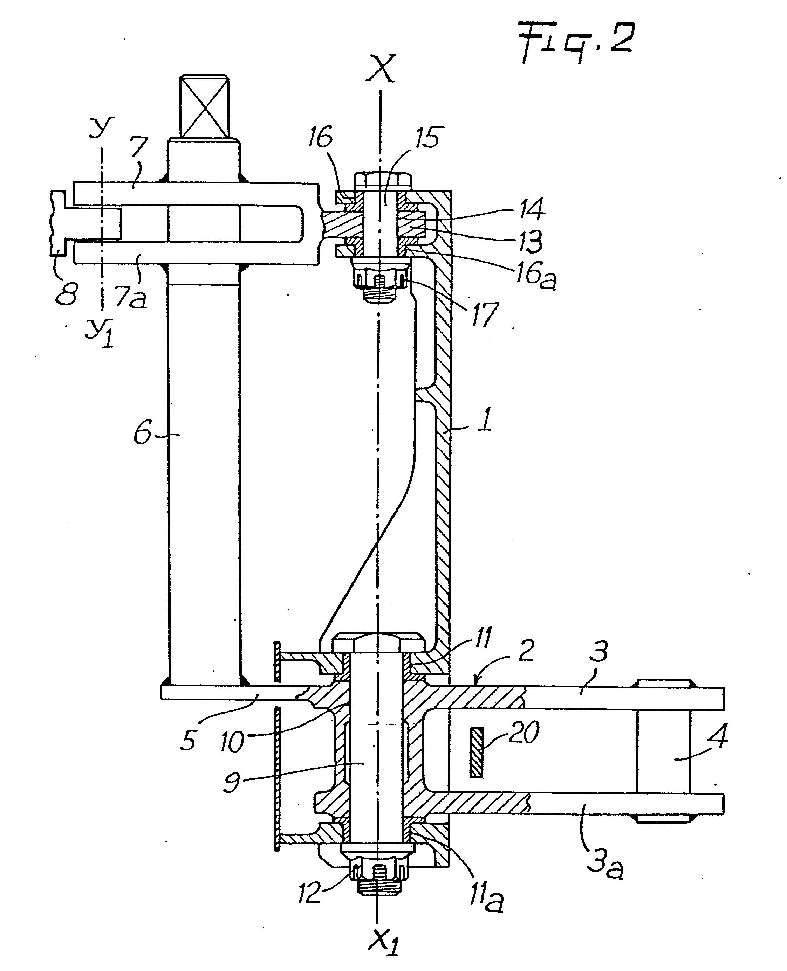

Aux figures 1 et 2 on a représenté un mode de réalisation du dispositif détecteur de position d'un inverseur de poussée de turboréacteur et de son verrouillage comprenant un organe de support fixe 1 sur lequel est monté pivotant suivant un axe $XX_1$ un organe de verrouillage 2 qui est constitué d'un étrier présentant deux branches 3, 3a entre lesquelles est fixé un axe 4. Du côté opposé à l'étrier 3, 3a par rapport à l'axe $XX_1$ l'organe de verrouillage est prolongé par un bras 5 sur lequel est fixée l'une des extrémités d'une tige 6 dont l'autre extrémité est solidaire d'un second étrier dont les branches 7, 7a sont engagées sur la tige 6 et entre lesquelles est montée de façon articulée au moyen d'un axe $YY_1$ une tige 8 d'un vérin de commande.

L'organe de verrouillage 2 est monté de façon pivotante autour de l'axe $XX_1$ sur l'organe de support 1 au moyen d'une vis 9 engagée dans un alésage 10 dudit organe et dans des bagues 11, 11a solidaires de l'organe de support 1, ladite vis 9 étant munie à l'une de ses extrémités d'un écrou de fixation 12. Le second étrier 7, 7a est prolongé par une patte 13 présentant un alésage 14 dans lequel est engagée une vis 15 qui est montée au moyen de bagues 16, 16a dans l'organe de support 1 sur lequel elle est fixée au moyen d'un écrou 17. Les vis 9 et 15 sont disposées coaxialement suivant l'axe $XX_1$, pour assurer le pivotement de l'ensemble de l'organe de verrouillage 2.

Entre les branches 3, 3a de l'étrier est susceptible d'être engagé un crochet 18 qui est solidaire de la partie mobile de l'inverseur non représentée au dessin, ledit crochet présentant un logement 18a dans lequel est susceptible d'être engagé l'axe 4.

Sur un prolongement de l'organe de verrouillage 2 situé du côté de l'étrier 3, 3a est fixée suivant un axe $ZZ_1$ parallèle à l'axe $XX_1$ une vis 19 autour de laquelle est articulé un levier 20 présentant deux bras 20a, 20b, dont l'un 20a est susceptible de venir en contact avec l'extrémité 18b du crochet 18 et dont l'autre 20b est en contact avec un galet 21 monté rotatif à l'extrémité d'un organe mobile 22 de commande d'un organe de détection électrique 23 fixé sur l'organe de support 1 et dont la position peut être réglée au moyen d'une vis 24 montée sur l'organe de support 1.

A son extrémité qui est en contact avec le galet 21, le bras 20b présente une face rectiligne 25 prolongée par une face 26 délimitant un évidement, lesdites faces 25 et 26 assurant le guidage du galet et contrôlant le déplacement de l'organe de commande 22 qui est repoussé par un ressort non représenté au dessin contre ledit bras 20b du levier 20 suivant la flèche F. Le ressort du détecteur exerce une force F qui applique un moment dans le sens de verrouillage ce qui est favorable à la sécurité contre un déverrouillage provoqué par un défaut du vérin, une rupture du ressort de rappel par exemple. Cet effet est toutefois léger car la force du ressort est faible.

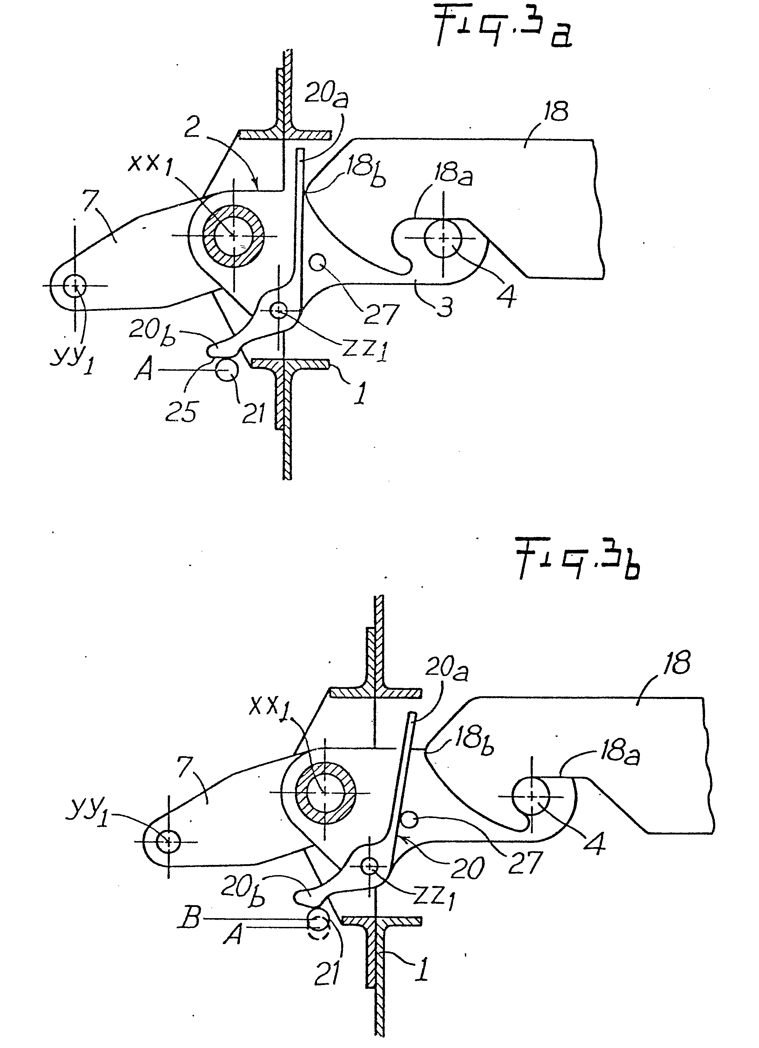

A la figure 3a, on a représenté le dispositif dans sa position nominale, lorsque la partie mobile est escamotée, l'ensemble des éléments contribuant au verrouillage du crochet 18 et de la partie mobile de l'inverseur. Le crochet 18 étant repoussé vers la gauche, son extrémité 18b est en contact avec le bras 20a du levier 20 qui maintient par son bras 20b le galet 21 du détecteur en position A qui correspond au circuit électrique ouvert, donc à l'absence de signalisation, notamment par un signal lumineux (lampe éteinte).

Si, pour une raison quelconque, la partie mobile tend à se déployer sans ordre de commande, le crochet 18 se déplace vers la droite et l'axe 4 vient s'engager dans le fond du logement 18a. Le levier 20 qui n'est plus en contact avec l'extrémité 18b du crochet 18 pivote autour de son axe $ZZ_1$ entraîné sous l'effort du ressort du détecteur qui agit suivant la flèche F. Le bras 20a se trouve alors en appui contre un organe de butée 27 solidaire de l'organe de verrouillage 2 et le déplacement du levier 20 permet au galet 21 d'occuper une position B pour laquelle le circuit électrique est fermé assurant ainsi l'allumage d'un signal lumineux.

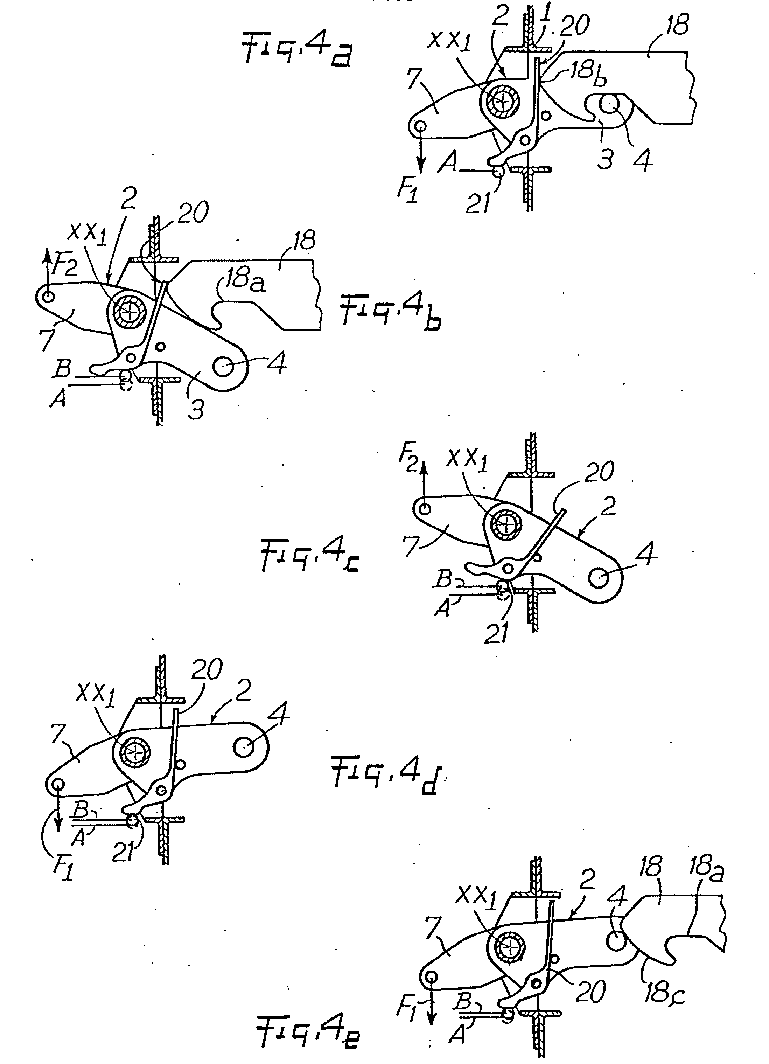

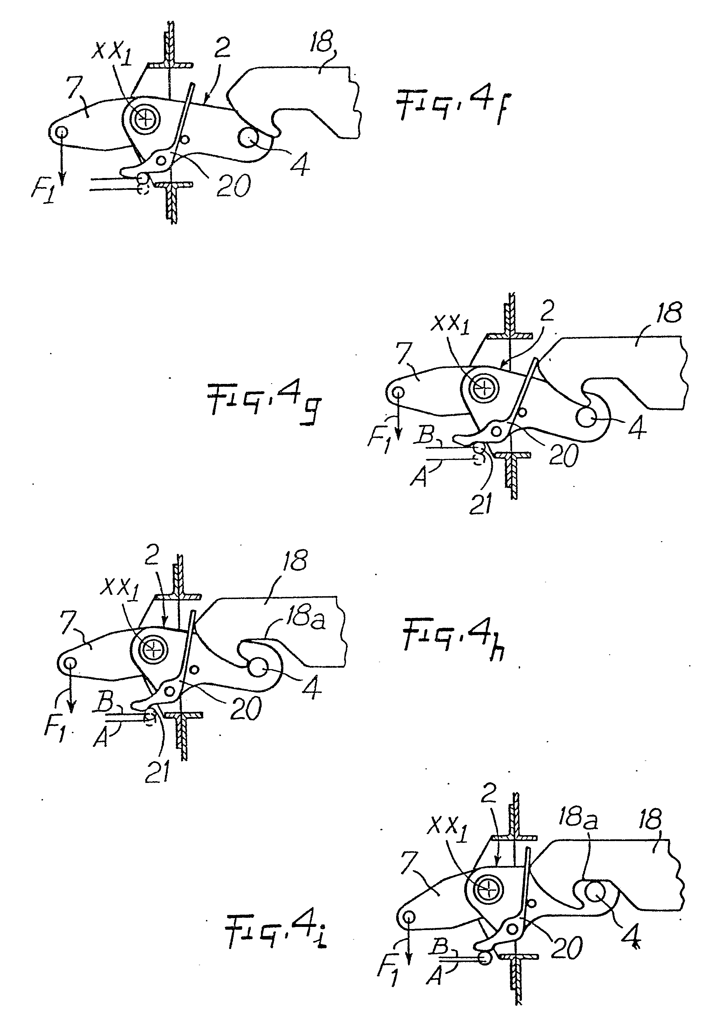

Aux figures 4a à 4i, on a représenté le dispositif en fonctionnement au cours d'un cycle complet.

A la figure 4a, le dispositif se trouve dans sa position nominale de départ qui a été décrite ci-dessus et représentée également à la figure 3a ; dans ce cas, le vérin exerce une force $F_1$ sur l'organe de verrouillage 2.

A la figure 4b, le vérin est actionné et il exerce une force $F_2$ sur l'organe de verrouillage 2 qui bascule autour de l'axe $XX_1$ libérant ainsi le crochet 18 de l'axe 4 monté sur ledit organe de verrouillage. Le crochet 18 solidaire de la partie mobile demeure dans sa position initiale mais déverrouillé, du fait que la partie mobile demeure en position escamotée.

A la figure 4c, on a représenté le dispositif lorsque la partie mobile est déployée et que le crochet 18 se déplaçant vers la droite n'est plus visible au dessin.

A la figure 4d qui correspond à la position de la partie mobile déployée, l'organe de verrouillage est remis en position de verrouillage en actionnant le vérin qui exerce sur celui-ci une force $F_1$.

A la figure 4e, la partie mobile revient en position escamotée et le crochet 18 vient en appui sur l'axe 4 de l'organe de verrouillage 2. L'axe 4 suit la pente 18c du crochet au fur et à mesure que celui-ci se déplace vers la gauche comme représenté aux figures 4f et 4g.

Lorsque l'axe 4 parvient au bout de la pente 18c du crochet 18 comme représenté à la figure 4h, l'axe 4 pénètre dans le logement 18a permettant ainsi à l'organe de verrouillage 2 de basculer autour de l'axe $XX_1$ en sens inverse des aiguilles d'une montre sous l'action de la force $F_1$ exercée par le vérin.

Pendant les différentes phases de l'opération représentées aux figures 4b à 4i, les différents éléments ne se trouvent pas dans leur position nominale, et le levier 20 occupe toujours une position pour laquelle il ne peut détecter la présence simultanée de l'organe de verrouillage 2 et du crochet 18, c'est-à-dire réaliser une fonction logique ET.

De ce fait, dans les phases de l'opération représentées aux figures 4b à 4i, le galet 21 se trouve toujours dans la position B qui correspond à la fermeture du circuit contrôlé par le détecteur 23 et à l'allumage d'un signal lumineux notamment. L'ouverture du circuit électrique ne s'effectue que lorsque le crochet 18 revient en fin de course (figure 4a) et que son extrémité 18b vient en appui contre le bras 20a du levier 20 dont l'autre bras 20b exerce une pression sur le galet 21 qui occupe à nouveau la position A.

Bien entendu, la description n'est pas limitative et l'homme de l'art pourra y apporter des modifications sans sortir pour cela du domaine de l'invention.

**Revendications**

1. Dispositif détecteur de position d'un inverseur de poussée de turboréacteur et de son verrouillage comportant un organe solidaire de la partie mobile de l'inverseur qui coopère avec un moyen de verrouillage mécanique et un moyen de détection électrique fixe de la position de l'organe solidaire de l'inverseur et du moyen de verrouillage dans lequel le moyen de verrouillage (2) monté pivotant sur un organe de support (1) présente d'un côté de l'axe de pivotement $(XX_1)$ un bras (5) qui est relié à un vérin de commande (8) et de l'autre côté un étrier (3) qui est susceptible de coopérer avec un élément de l'organe solidaire de la partie mobile de l'inverseur qui est animé d'un mouvement de translation rectiligne, caractérisé en ce que ledit étrier (3) présente un axe (4) sur lequel est susceptible d'être engagé un crochet (18) dudit organe solidaire de l'inverseur et en ce que ledit moyen de verrouillage (2) porte un axe $(ZZ_1)$ parallèle à son axe $(XX_1)$ de pivotement et sur lequel est articulé un levier (20) actionné par le crochet (18) et présentant deux bras (20a, 20b) dont l'un (20a) est susceptible de venir en contact avec l'extrémité (18b) du crochet (18) et dont l'autre (20b) est en contact avec un organe mobile (22) de commande du moyen de détection (23).

2. Dispositif suivant la revendication 1, caractérisé en ce que l'étrier (3) du moyen de verrouillage (2) présente un organe de butée (27) contre lequel est susceptible de venir en appui le bras (20a) du levier (20) coopérant avec l'extrémité (18b) du crochet (18).

3. Dispositif suivant la revendication 1, caractérisé en ce que le bras (20b) du levier (20) en contact avec l'organe de commande (22) présente à son extrémité une face rectiligne (25) prolongée par une face (26) délimitant un évidement contre lesquelles se déplace un galet rotatif (21) solidaire de l'organe de commande (22) du moyen de détection électrique (23).

4. Dispositif suivant la revendication 3, caractérisé en ce que le galet (21) est en appui sur les faces (25, 26) du bras (20b) du levier (20) sous l'action d'un organe élastique.

5. Dispositif suivant la revendication 1, caractérisé en ce que le moyen de verrouillage (2) présente du côté opposé à l'étrier (3) qui coopère avec le crochet (18), un bras (5) sur lequel est fixée l'extrémité d'une tige (6) dont l'autre extrémité est solidaire d'un second étrier (7, 7a) sur lequel est articulée la tige (8) du vérin et qui porte une patte (13) qui est montée pivotante sur l'organe de support (1) coaxialement à l'organe de verrouillage (2).

**Claims**

1. Device for the detection of the position and the locking of a thrust-reverser of a turbo jet engine comprising a member rigid with the movable part of the reverser which cooperates with a mechanical locking means and a fixed electrical detection means in the position of the member rigid with the reverser and of the locking means in which the locking means (2) pivotally mounted on a mounting member (1) have on one side of the pivot axis $(XX_1)$ an arm (5) which is connected to a control actuator (8) and on the other side a clevis (3) which is arranged to cooperate with a part of the member rigid with the movable part of the reverser which is actuated with a rectilinear translational motion, characterized in this that the said clevis (3) has a pin (4) which is capable of being engaged by a hook (18) of the said member rigid with the reverser and in this that the said locking means (2) carry a pin $(ZZ_1)$ parallel with its pivot axis $(XX_1)$ and on which is pivoted a lever (20) operated by the hook (18) and having two arms (20a, 20b) of which the one (20a) is capable of coming into contact with the end (18b) of the hook (18) and of which the other (20b) is in contact with a movable member (22) for controlling the detection means (23).

2. Device according to claim 1, characterized in this that the clevis (3) of the locking means (2) has an abutment member (27) against which the arm (20a) of the lever (20) cooperating with the end (18b) of the hook (18) can make contact.

3. Device according to claim 1, characterized in this that the arm (20b) of the lever (20) in contact with the control member (22) has at its end a rectilinear face (25) extended by a face (26) defining a recess by which a rotary roller (21) rigid with the control member (22) of the electrical detection means (23) is displaceable.

4. Device according to claim 3, characterized in this that the roller (21) contacts the surfaces (25, 26) of the arm (20b) of the lever (20) under the action of a resilient member.

5. Device according to claim 1, characterized in this that the locking means (2) have on the side opposite to the clevis (3) which cooperates with the hook (18), an arm (5) on which is secured the end of a rod (6) of which the other end is rigid with a second clevis (7, 7a) on which is picoted the rod (8) of the actuator and which supports a tongue (13) which is pivotally mounted on the mounting member (1) coaxially with the locking member (2).

**Ansprüche**

1. Einrichtung zur Bestimmung der Lage und der Verriegelung einer Schubumkehrvorrichtung eines Turboreaktors, mit einem mit dem beweglichen Teil der Schubumkehrvorrichtung starr verbundenen Organ, das mit einer mechanischen Verriegelungseinrichtung und einer feststehenden elektrischen Einrichtung zur Bestimmung der Position des mit der Schubumkehrvorrichtung starr verbundenen Organs und der Verriegelungsvorrichtung zusammenwirkt, wobei die Verriegelungseinrichtung (2), die drehbar an einem Tragteil (1) angebracht ist, auf der einen Seite der Drehachse (XX₁) einen Arm (5) aufweist, der mit einem Steuerzylinder (8) verbunden ist, und auf der anderen Seite einen Bügel (3), der mit einem Element des mit dem beweglichen Teil der Schubumkehrvorrichtung starr verbundenen Organs zusammenwirken kann, welches zu einer geradlinigen Translationsbewegung veranlaßt wird, dadurch gekennzeichnet, daß der Bügel (3) eine Welle (4) besitzt, an der ein Haken (18) des mit der Schubumkehrvorrichtung starr verbundenen Organs angreifen kann, und daß die Verriegelungeinrichtung (2) eine zu ihrer Achse (XX₁) parallele Achse (ZZ₁) aufweist, an der ein Hebel (20) schwenkbar angebracht ist, der durch den Haken (18) betätigbar ist und der zwei Arme (20a, 20b) besitzt, von denen der eine (20a) mit dem Ende (18b) des Hakens (18) in Kontakt treten kann, während der andere (20b) ein bewegliches Steuerorgan (22) der Bestimmungseinrichtung (23) berührt.

2. Vorrichtung nach Anspruch 1, dadurch gekennzeichnet, daß der Bügel (3) der Verriegelungseinrichtung (2) ein Anschlagteil (27) aufweist, gegen das sich der Arm (20a) des Hebels (20) zu legen vermag, der mit dem Ende (18b) des Hakens (18) zusammenwirkt.

3. Vorrichtung nach Anspruch 1, dadurch gekennzeichnet, daß der mit dem Steuerorgan (22) in Kontakt stehende Arm (20b) des Hebels (20) an seinem Ende eine geradlinige Fläche (25) aufweist, die in eine Fläche (26) übergeht, die eine Ausnehmung begrenzt, an welchen Flächen sich eine umlaufende Rolle (21) verlagert, die starr mit dem Steuerorgan (22) der elektrischen Bestimmungsvorrichtung (23) verbunden ist.

4. Vorrichtung nach Anspruch 3, dadurch gekennzeichnet, daß die Rolle (21) an den Flächen (25, 26) des Arms (20b) des Hebels (20) unter der Wirkung eines federnden Organs anliegt.

5. Vorrichtung nach Anspruch 1, dadurch gekennzeichnet, daß die Verriegelungseinrichtung (2) an der dem mit dem Haken (18) zusammenwirkenden Bügel (3) gegenüberliegenden Seite einen Arm (5) aufweist, an dem das Ende einer Stange (6) befestigt ist, deren anderes Ende mit einem zweiten Bügel (7, 7a) starr verbunden ist, an den die Stange (8) des Arbeitszylinders angelenkt ist und der eine Lasche (13) trägt, die schwenkbar an dem Tragteil (1), koaxial zu dem Verriegelungsorgan (2) angebracht ist.

Fig.1

Fig.2

0 046 096

**Fig.3a**

**Fig.3b**

3

0 046 096

Fig.4a

Fig.4b

Fig.4c

Fig.4d

Fig.4e

4

Fig. 4f

Fig. 4g

Fig. 4h

Fig. 4i

5